# EUROPEAN PATENT APPLICATION

(11) **EP 3 381 755 A1**
(43) Date of publication of application: **03.10.2018**
(21) Application number: 16868573.3
(22) Date of filing: 22.11.2016
(51) Int. Cl.: B60W 10/26, B60K 6/485, B60K 6/547, B60L 11/14, B60W 10/08

(54) **HYBRID VEHICLE AND CONTROL METHOD THEREFOR**

(30) Priority: 24.11.2015 JP 2015228483
(71) Applicant: Isuzu Motors, Ltd., Shinagawa-ku Tokyo 140-8722 (JP)
(72) Inventor: HORII, Yuusuke, Fujisawa-shi Kanagawa 252-0881 (JP)
(74) Representative: Miller Sturt Kenyon
(86) International application number: PCT/JP2016/084665
(87) International publication number: WO 2017/090630

(57) **Abstract**

When a charging rate of a high-voltage battery (32) becomes equal to or lower than a preset lower limit value, a control device (80) is configured to execute control of obtaining a power consumption of a DC/DC converter (33) and causing a motor generator (31) to start power generation operation by an engine (10) by which power equal to or greater than the power consumption is generated to charge the high-voltage battery (32).

## Description

### Technical Field

The disclosure relates to a hybrid vehicle and a control method therefor, and more particularly, to a hybrid vehicle and a control method therefor, which are capable of reliably recovering a charging rate of a high-voltage battery for driving a motor generator.

### Background Art

Recently, from the viewpoint of fuel efficiency improvement and environmental measures or the like, much focus is placed on a hybrid vehicle (hereinafter, referred to as "HEV") including an engine and a motor generator which are complexly controlled according to a driving state of a vehicle. In this HEV, during accelerating or starting of the vehicle, assist of a driving source by the motor generator is performed. On the other hand, during inertia travelling or braking of the vehicle, regenerative power generation by the motor generator is performed (e.g., see Patent Document 1).

In order to make a hybrid system fully functioning, it is necessary to maintain a charging rate of a high-voltage battery for driving a motor generator to a certain value or more. Charging of the high-voltage battery is performed by regenerative power generation by the motor generator described above. Therefore, in the case where the regenerative power generation cannot be performed for a long time, the charging rate of the high-voltage battery may be lowered and the hybrid system may not function sufficiently.

### Prior Art Reference

### Patent Document

Patent Document 1: JP-A-2002-238105

### Disclosure of the Invention

### Problems to be Solved

The disclosure aims to provide a hybrid vehicle and a control method therefor, which are capable of reliably recovering a charging rate of a high-voltage battery for driving a motor generator.

### Means for Solving the Problems

In order to achieve the above object, a hybrid vehicle of the disclosure includes: a hybrid system including a motor generator connected to an output shaft configured to transmit a power of an engine; a high-voltage battery, a DC/DC converter, and a low-voltage battery which are electrically connected to the motor generator in this order; and a control device, wherein, when a charging rate of the high-voltage battery becomes equal to or lower than a preset lower limit value, the control device is configured to execute control of obtaining a power consumption of the DC/DC converter and causing the motor generator to start power generation operation by the engine by which power equal to or greater than the power consumption is generated to charge the high-voltage battery.

Further, in order to achieve the above object, a control method of a hybrid vehicle of the disclosure is a control method of a hybrid vehicle which includes a hybrid system including a motor generator connected to an output shaft configured to transmit a power of an engine, and a high-voltage battery, a DC/DC converter, and a low-voltage battery which are electrically connected to the motor generator in this order, the control method including: monitoring a charging rate of the high-voltage battery; obtaining a power consumption of the DC/DC converter when the charging rate becomes equal to or lower than a preset lower limit value; and causing the motor generator to start power generation operation by the engine by which power equal to or greater than the power consumption is generated to charge the high-voltage battery.

### Advantageous Effects of Invention

According to the hybrid vehicle and the control method therefor of the disclosure, when the charging rate of the high-voltage battery is lowered, the high-voltage battery is charged by the power generation operation of the motor generator by the engine with the power consumption of the DC/DC converter as the minimum power generation. Thus, it is possible to reliably recover the charging rate of the high-voltage battery for driving the motor generator.

### Brief Description of Drawings

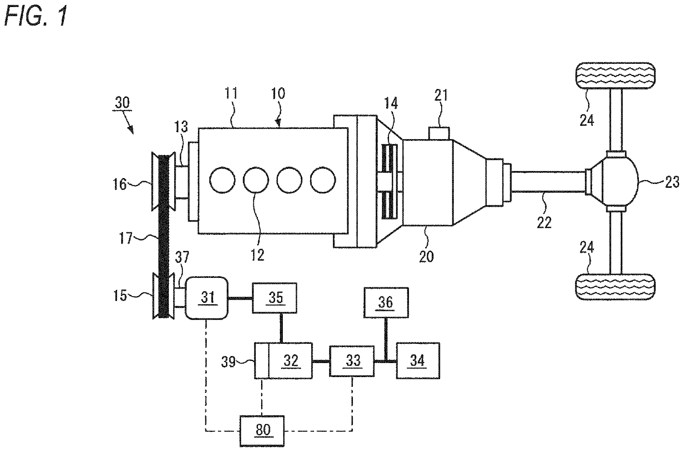

FIG. 1 is a configuration view of a hybrid vehicle according to an embodiment of the disclosure; and
FIG. 2 is a flow diagram for explaining a control method of a hybrid vehicle according to an embodiment of the disclosure.

### Mode for Carrying Out the Invention

The hybrid vehicle (hereinafter, referred to as "HEV") is a vehicle including not only an ordinary passenger car but also a bus, a truck and the like. The hybrid vehicle includes a hybrid system 30 including an engine 10 and a motor generator 31 which are complexly controlled according to a driving state of a vehicle.

In the engine 10, a crankshaft 13 is rotationally driven by thermal energy generated by combustion of fuel in a plurality of (four in this example) cylinders 12 formed in an engine main body 11. A diesel engine or a gasoline engine is used for the engine 10. Rotational power of the crankshaft 13 is transmitted to a transmission 20 via a clutch 14 (e.g., wet multi-disc clutch or the like) connected to one end portion of the crankshaft 13.

AMT or AT for automatically shifting gears, by using a shifting actuator 21, to a target gear stage determined on the basis of the driving state of the HEV and preset map data is used for the transmission 20. Meanwhile, the transmission 20 is not limited to an automatic transmission type such as AMT, but may be a manual type in which a driver manually shifts gears.

The rotational power shifted by the transmission 20 is transmitted to a differential 23 via a propeller shaft 22 and is distributed as a driving force to each of a pair of driving wheels 24.

The hybrid system 30 includes the motor generator 31. Further, the hybrid system 30 includes an inverter 35, a high-voltage battery 32, a DC/DC converter 33, and a low-voltage battery 34, which are electrically connected to the motor generator 31 in this order.

A lithium ion battery or a nickel hydrogen battery or the like is preferably exemplified as the high-voltage battery 32. Further, a lead battery is used for the low-voltage battery 34.

The DC/DC converter 33 is located between the high-voltage battery 32 and the low-voltage battery 34 and has a function of controlling the direction of charging and discharging and the output voltage. Further, the low-voltage battery 34 is adapted to supply electric power to various vehicle electrical devices 36.

Various parameters in the hybrid system 30, for example, current value, voltage value, and SOC and the like are detected by BMS 39.

Power is transmitted between the motor generator 31 and the engine 10 via an endless belt-like member 17 wrapped around a first pulley 15 attached to a rotation shaft 37 and a second pulley 16 attached to the other end of the crankshaft 13 that is an output shaft of the engine main body 11. Meanwhile, power can be transmitted by using a gear box or the like, instead of the two pulleys 15, 16 and the belt-like member 17. Further, the output shaft of the engine main body 11 connected to the motor generator 31 is not limited to the crankshaft 13. For example, the output shaft may be a transmission shaft between the engine main body 11 and the transmission 20 or may be the propeller shaft 22.

The motor generator 31 also has a function of performing cranking, instead of a starter motor (not shown) for starting the engine main body 11.

The engine 10 and the hybrid system 30 are controlled by a control device 80. Specifically, during starting or accelerating of the HEV, the hybrid system 30 assists at least a part of a driving force by the motor generator 31 supplied with power from the high-voltage battery 32. On the other hand, during inertia travelling or braking of the HEV, the hybrid system 30 performs the regenerative power generation by the motor generator 31, and converts excessive kinetic energy into electric power to charge the high-voltage battery 32.

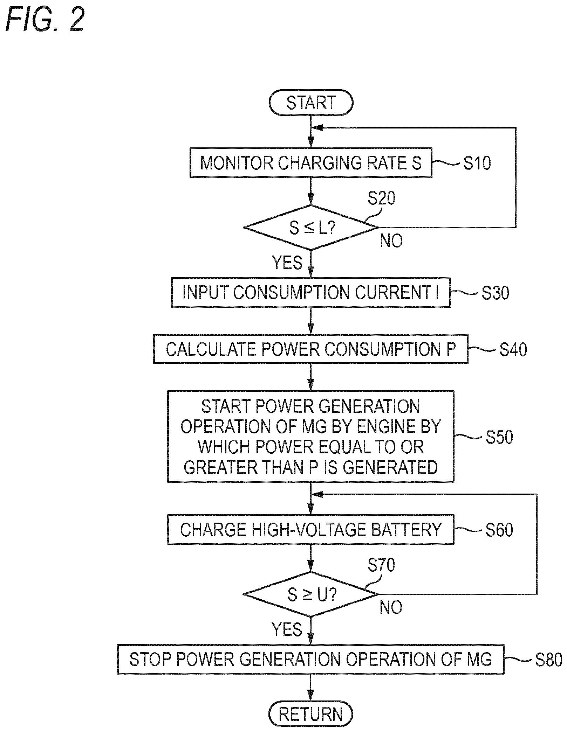

Next, a control method of the HEV will be described below as the function of the control device 80 with reference to FIG. 2. Here, the control device 80 is connected to each element via a signal line (indicated by one-dot chain line)

The control device 80 monitors a charging rate S of the high-voltage battery 32 through the BMS 39 (S10) and determines whether or not the charging rate S has become equal to or lower than a preset lower limit value L (S20). Although the lower limit value L is determined by the specifications of the hybrid system 30, the lower limit value L is preferably exemplified by a value within a range of about 30% to 40% of the charging rate S at which the hybrid system 30 can sufficiently function.

Subsequently, when the charging rate S becomes equal to or lower than the lower limit value L, the control device 80 inputs a consumption current I monitored by a current sensor of the DC/DC converter 33 (S30) and calculates a power consumption P of the DC/DC converter 33 (S40).

Then, the control device 80 causes the motor generator 31 to start the power generation operation by which power equal to or greater than the power consumption P by the engine 10 (S50) is generated and charges the high-voltage battery 32 (S60).

Finally, the control device 80 determines whether or not the charging rate S of the high-voltage battery 32 has become equal to or greater than the preset upper limit value U (S70) and stops the power generation operation of the motor generator 31 when the charging rate S has become equal to or greater than the upper limit value U (S80).

As the upper limit value U, the rated maximum capacity of the high-voltage battery 32 is exemplified. Here, the rated maximum capacity is a value predetermined in accordance with the manufacturing specifications of the high-voltage battery 32. For example, in the case of a lithium ion battery, the rated maximum capacity refers to a state in which the charging rate S is in the range of about 70% to 90%.

In this way, when the charging rate S of the high-voltage battery 32 is lowered, the high-voltage battery 32 is charged by the power generation operation of the motor generator 31 by the engine 10 with the power consumption P of the DC/DC converter 33 as the minimum power generation. Thus, it is possible to reliably recover the charging rate S of the high-voltage battery 32.

The present application is based on Japanese Patent Application (Patent Application No. 2015-228483) filed on November 24, 2015, the contents of which are incorporated herein as a reference.

### Industrial Applicability

The hybrid vehicle of the disclosure is useful in that a charging rate of a high-voltage battery for driving a motor generator can be reliably recovered.

### Reference Signs List

10 Engine
30 Hybrid System
31 Motor Generator
32 High-Voltage Battery
33 DC/DC Converter
34 Low-Voltage Battery
80 Control Device

## Claims

1. A hybrid vehicle comprising:
a hybrid system including a motor generator connected to an output shaft configured to transmit a power of an engine;
a high-voltage battery, a DC/DC converter, and a low-voltage battery which are electrically connected to the motor generator in this order; and
a control device,
wherein, when a charging rate of the high-voltage battery becomes equal to or lower than a preset lower limit value, the control device is configured to execute control of obtaining a power consumption of the DC/DC converter and causing the motor generator to start power generation operation by the engine by which power equal to or greater than the power consumption is generated to charge the high-voltage battery.

2. The hybrid vehicle according to claim 1,
wherein the control device is configured to execute control of causing the motor generator to stop the power generation operation when the charging rate of the high-voltage battery becomes equal to or greater than a preset upper limit value.

3. The hybrid vehicle according to claim 1 or 2,
wherein the preset lower limit value has a value in a range of 30% to 40%.

4. A control method of a hybrid vehicle which includes a hybrid system including a motor generator connected to an output shaft configured to transmit a power of an engine, and a high-voltage battery, a DC/DC converter, and a low-voltage battery which are electrically connected to the motor generator in this order, the control method comprising:
monitoring a charging rate of the high-voltage battery;
obtaining a power consumption of the DC/DC converter when the charging rate becomes equal to or lower than a preset lower limit value; and
causing the motor generator to start power generation operation by the engine by which power equal to or greater than the power consumption is generated to charge the high-voltage battery.
